# FASCICULE DE BREVET EUROPEEN

(11) **EP 2 487 864 B1**
(45) Date de publication et mention de la délivrance du brevet: **08.01.2020**
(21) Numéro de dépôt: 12154068.6
(22) Date de dépôt: 06.02.2012
(51) Int. Cl.: H04L 29/06

(54) **PROCÉDÉ ET DISPOSITIF DE GESTION DYNAMIQUE DE LA PRIORITÉ DE RÉCEPTION D'UNE COMMUNICATION D'UN TERMINAL**
VERFAHREN UND VORRICHTUNG ZUR DYNAMISCHEN VERWALTUNG DER EMPFANGSPRIORITÄT EINER KOMMUNIKATION VON EINEM ENDGERÄT
METHOD AND DEVICE FOR DYNAMIC MANAGEMENT OF THE COMMUNICATION RECEPTION PRIORITY OF A TERMINAL

(30) Priorité: 10.02.2011 FR 1151083
(43) Date de publication de la demande: 15.08.2012
(73) Titulaire: Orange, 75015 Paris (FR)
(72) Inventeur: Bouvet, Bertrand, 22700 Perros-Guirec (FR)

(56) Documents cités:
- EP-A1- 2 086 167
- WO-A1-2009/143884
- WO-A1-2010/000295

## Description

### Domaine de l'invention

L'invention se situe dans le domaine des réseaux de télécommunication. Elle concerne un dispositif et un procédé de gestion dynamique de la priorité de réception d'une communication d'un terminal relié à un réseau de communication IP (pour Internet Protocol en anglais).

### Art antérieur

Il est aujourd'hui possible de connecter une pluralité de terminaux sur une même installation téléphonique reliée au réseau IP et abonnée à un service de VoIP (pour Voice over IP en anglais).

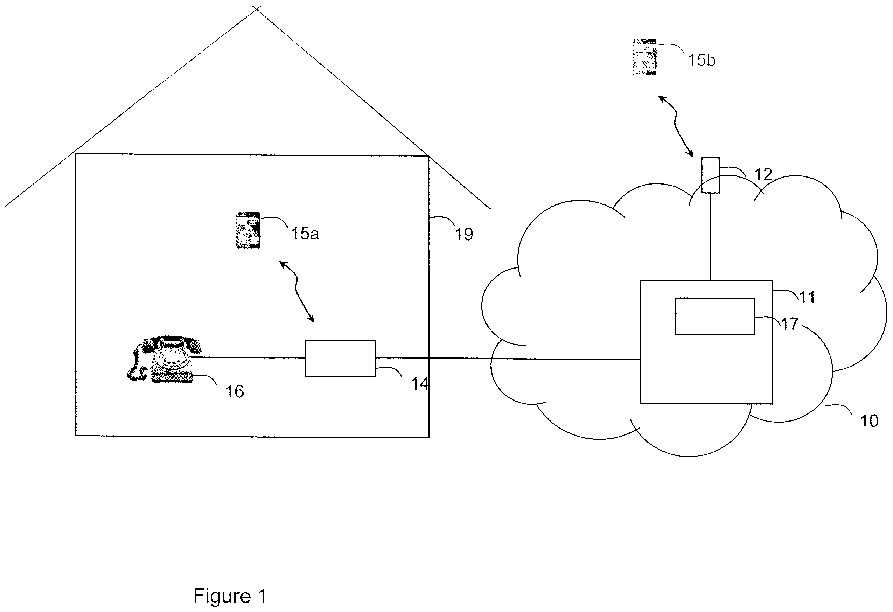

La figure 1 illustre une telle installation reliée au réseau de communication IP (10).

Plusieurs terminaux analogiques ou DECT (pour Digital Enhanced Cordless Telephone en anglais) (16) peuvent être connectés à l'installation téléphonique via une passerelle résidentielle (14). La passerelle résidentielle (14) intègre une pile VoIP qui s'interface avec les terminaux de l'installation. La pile VoIP permet à la passerelle de gérer les communications vers ou en provenance de ces terminaux.

Les services de téléphonie de type VoIP sont principalement mis en œuvre sur des réseaux de communication de type IMS (pour IP Multimedia Subsystem en anglais) en utilisant le protocole SIP (pour Session Initiation Protocol en anglais).

Pour pouvoir émettre ou recevoir des communications à partir de l'installation téléphonique, la passerelle résidentielle (14) s'enregistre dans le cœur de réseau IMS (11) par l'envoi régulier de messages SIP REGISTER. Le message SIP REGISTER comprend en particulier des informations d'enregistrement, comme par exemple l'adresse IP de la passerelle résidentielle ainsi qu'un numéro de port, le protocole de transport utilisé, tel que par exemple TCP (pour Transmission Control Protocol en anglais), UDP (pour User Datagram Protocol en anglais), TLS (pour Transport Layer Security en anglais) ou tout autre protocole de transport, et le numéro de téléphone de la ligne téléphonique de l'installation correspondant à son identité publique, aussi appelée IMPU (pour IP Multimedia Public Identity).

Il est également possible d'ajouter des terminaux de type softphone (téléphone logiciel) à l'installation téléphonique.

Un terminal de type softphone peut être par exemple un ordinateur de type PC (pour Personal Computer en anglais), un PDA (pour Personal Digital Assistant en anglais), ou un téléphone mobile intelligent, appelé Smartphone en anglais, ou bien une IPTV (télévision connectée au réseau IP), ou encore une tablette. Ces terminaux nécessitent l'installation d'un logiciel de téléphonie VoIP pour pouvoir assurer la fonctionnalité de téléphonie.

Pour qu'un client bénéficie du service de téléphonie VoIP de son installation téléphonique sur ces terminaux, ces derniers doivent être enregistrés en cœur de réseau IMS avec la même identité publique IMPU que l'installation téléphonique du client.

Ces terminaux peuvent être soit connectés directement à l'installation téléphonique, soit utilisés en usage nomade. En connexion directe à l'installation téléphonique, le terminal de type softphone (15a) est connecté au réseau IP par exemple par l'intermédiaire d'une prise Ethernet de la passerelle résidentielle ou par l'intermédiaire d'une connexion sans fil sur le réseau WiFi de la passerelle.

En usage nomade, le terminal (15b) se connecte au réseau IP par l'intermédiaire d'un point d'accès (12) et d'une connexion sans fil WiFi. Plus généralement, cette connexion sans fil peut également être une connexion data sur un réseau mobile tels que par exemple: 3G, HSDPA (pour High Speed Downlink Packet Access en anglais), HSUPA (pour High Speed Uplink Packet Access en anglais), HSPA+ (pour High Speed Packet Access en anglais), WiMax (pour Worldwide Interoperability for Microwave Access en anglais) ou LTE (pour Long Term Evolution en anglais). Le terminal en usage nomade peut aussi être connecté à travers une connexion filaire (Ethernet par exemple) à un point d'accès du réseau IP.

Ainsi, un utilisateur d'une installation téléphonique peut disposer d'une pluralité de terminaux de différents types pour émettre ou recevoir des communications depuis son installation ou en dehors de cette installation tout en utilisant un unique numéro de téléphone (une unique identité publique dans le réseau IMS).

Tous les terminaux connectés à l'installation téléphonique et identifiés par la même identité publique bénéficient de la même offre de services téléphoniques que l'installation téléphonique. Ces services téléphoniques sont fournis par un serveur d'application localisé dans le réseau IMS.

Lorsque plusieurs terminaux sont enregistrés en cœur de réseau IMS avec la même identité publique et qu'une communication entrante se présente, le cœur de réseau IMS met en œuvre à l'aide du protocole SIP un mécanisme de "forking". Le terme "forking" est un terme connu de l'homme du métier et décrit un mécanisme connu du domaine des réseaux de type IMS. Le mécanisme de "forking" est un mécanisme de présentation d'une communication entrante à un ou plusieurs terminaux mis en œuvre lorsque plusieurs terminaux partagent la même identité publique. Ce mécanisme est géré par un serveur du réseau IMS appelé S-CSCF (pour Serving Call state Control Function en anglais, 17 sur la figure 1). Le mécanisme de "forking" présente la communication entrante aux terminaux de l'installation téléphonique en fonction de la priorité attribuée à ces terminaux.

Selon le service proposé, le mécanisme de "forking" peut être simultané: la communication est alors présentée en parallèle à tous les terminaux ayant la même priorité. Dès qu'un terminal accepte la communication, la présentation de la communication sur les autres terminaux est arrêtée.

Le mécanisme de "forking" peut aussi être séquentiel: la communication est alors présentée aux terminaux ayant la priorité la plus grande. Si aucun de ces terminaux n'accepte la communication, après un temps prédéterminé défini par l'expiration du délai de forking, la communication est ensuite présentée aux terminaux ayant une priorité moins importante. Avec ce mécanisme séquentiel, la communication est présentée aux terminaux par ordre de priorité des terminaux.

La priorité d'un terminal est définie par un paramètre q de la norme SIP RFC3261. La valeur de ce paramètre est une valeur réelle comprise entre 0 et 1, la valeur 1 donnant la plus grande priorité et la valeur 0 donnant la plus petite priorité. Lorsque le paramètre q d'un terminal n'est pas défini, sa valeur est assimilée à la valeur 0 par défaut. La valeur du paramètre de priorité q d'un terminal est fournie au cœur de réseau IMS dans l'adresse de contact du terminal, lors de la phase d'enregistrement SIP initiale, puis des phases d'enregistrements SIP subséquentes.

La valeur du paramètre de priorité q d'un terminal est fournie au terminal de manière statique par un fichier de configuration du terminal lors du démarrage du terminal. Cette valeur ne varie pas tant que le terminal ne recharge pas le fichier de configuration. Le terminal peut recharger le fichier de configuration:
- en mode pull: le système d'information de l'opérateur de télécommunications lui envoie alors périodiquement, par exemple toutes les 24 heures, le fichier de configuration.
- en mode push: si un service de configuration hébergé par un serveur du fournisseur du service VoIP est accessible via le réseau IP, l'utilisateur du terminal peut alors modifier la priorité de son terminal par l'intermédiaire d'une interface web disponible grâce à un service de selfcare (service d'autocontrôle)..

La valeur du paramètre de priorité q du terminal peut aussi être mise à jour grâce à une interface homme-machine du terminal.

La valeur du paramètre de priorité q du terminal peut également être configurée par exemple dans la carte SIM (pour Subscriber Identity Module en anglais) du terminal ou codée dans le firmware (logiciel embarqué) du terminal ou du logiciel softphone VoIP. Elle peut être mise à jour par l'opérateur de télécommunications lors d'une reconfiguration de la carte SIM du terminal par exemple.

Le document WO2009/143884A1 décrit un procédé pour déterminer un terminal vers lequel acheminer un appel à destination d'une identité publique partagée par plusieurs terminaux. Le procédé utilise un ensemble de polices associé à chaque terminal qui permet à un serveur HSS de déterminer si l'appel peut ou non être acheminé vers ce terminal. Dans certains cas, en fonction des polices à appliquer à chaque terminal, le serveur HSS peut trouver plusieurs terminaux vers lesquels l'appel peut être acheminé. Le procédé utilise alors une information de priorité pour fixer dans quel ordre chaque terminal est examiné. L'appel est acheminé vers le premier terminal examiné pour lequel une police permet le routage de l'appel vers ce terminal.

Le document WO2010/000295A1 décrit un procédé pour mettre à disposition d'un serveur S-CSCF une information de localisation d'un premier terminal partageant une même identité publique avec un second terminal, lorsque ce second terminal est déjà enregistré en cœur de réseau.

### Inconvénient de l'art antérieur

La valeur du paramètre de priorité q d'un terminal est statique et ne peut pas varier de manière dynamique sans intervention de l'utilisateur du terminal ou de l'opérateur de télécommunications. La qualité des services proposés aux terminaux identifiés par une même identité publique n'est alors pas optimale. Un terminal ayant une priorité grande peut être importuné par des communications entrantes qui lui sont présentées mais qu'il ne souhaite pas accepter car le terminal est utilisé par une autre communication ou une application par exemple.

Par exemple, pour une installation comportant un terminal analogique connecté à une passerelle résidentielle possédant un paramètre de priorité q égal à 0 et un terminal mobile intégrant un softphone et possédant un paramètre de priorité q égal à 0.5, une communication entrante va d'abord être présentée par le serveur S-CSCF au terminal mobile; si le terminal mobile est déjà en communication, il ne va peut-être pas accepter la communication et sera dérangé par la notification de cette nouvelle communication. Au bout d'un temps prédéfini par le compteur de temps (timer) de forking, le serveur S-CSCF annule la présentation de la communication entrante vers le terminal mobile et présente la communication à la passerelle résidentielle. L'initiateur de la communication a ainsi perdu du temps avant que la communication ne soit présentée à un terminal disponible et il aura alors pu déjà annuler sa communication avant qu'elle ne soit acceptée par le terminal connecté à la passerelle résidentielle.

Un autre exemple est celui où le terminal mobile est en situation de nomadisme. L'identité publique utilisée pour joindre l'installation téléphonique correspond souvent au numéro de téléphone du domicile. Lorsqu'une communication est initiée vers cette identité publique, si le terminal mobile a la valeur de paramètre de priorité la plus grande, la communication est alors présentée en premier au terminal mobile. Or, si le terminal mobile est en nomadisme, l'usager du terminal mobile n'est peut-être pas le destinataire avec lequel l'interlocuteur de la communication souhaitait entrer en communication. L'interlocuteur de la communication cherchait peut-être à joindre avant tout une personne située au domicile correspondant à l'identité publique.

### Exposé de l'invention

L'invention est présentée dans les revendications 1 à 15.

Un des buts de l'invention est d'apporter des améliorations par rapport à l'état de la technique.

Elle propose à cet effet un procédé de gestion dynamique de la priorité d'un terminal connecté à un réseau de télécommunications et partageant une même identité publique avec d'autres terminaux.

La priorité d'un terminal concerne la priorité de réception d'une communication par ce terminal.

Une communication correspond à n'importe quel type d'échange de données entre des terminaux tels que par exemple: communication audio, communication vidéo, communication texte T.140, fax, partage d'application, session de messagerie instantanée, ..., ou toute combinaison de ces types de communication.

Le procédé de gestion dynamique de la priorité d'un terminal comprend une étape de détection d'un événement prédéterminé relatif au premier terminal et dans le cas d'une détection positive une étape d'envoi d'une valeur du paramètre de priorité du premier terminal vers un dispositif de gestion du réseau de télécommunications, la valeur du paramètre de priorité étant affectée en fonction de l'évènement prédéterminé. Ainsi, la priorité d'un terminal peut varier de manière dynamique sans nécessiter d'intervention de l'utilisateur du terminal ou de l'opérateur de télécommunications.

Les différents modes ou caractéristiques de réalisation mentionnés ci-après peuvent être ajoutés indépendamment ou en combinaison les uns avec les autres, aux étapes du procédé défini ci-dessus.

Selon un mode de réalisation particulier de l'invention, l'étape d'envoi du procédé de gestion dynamique de la priorité d'un terminal est effectuée par une étape d'enregistrement du premier terminal auprès du dispositif de gestion du réseau de télécommunications. Ainsi, dans un réseau IMS, le dispositif de gestion du réseau est informé de la priorité d'un terminal lors de la réception d'un message SIP REGISTER d'enregistrement du terminal. Le terminal n'a ainsi pas à envoyer de messages supplémentaires au message d'enregistrement. Le message SIP REGISTER peut alors être envoyé avant la périodicité nominale d'enregistrement.

Selon un mode de réalisation particulier de l'invention, le procédé de gestion dynamique de la priorité d'un terminal comprend une étape préalable de dés-enregistrement du premier terminal auprès du dispositif de gestion du réseau de télécommunications. Par exemple, pour les réseaux IMS dans lesquels une fonctionnalité de "Registration Caching" est mise en place, les messages d'enregistrement envoyés à intervalle régulier ne parviennent pas de manière systématique au cœur de réseau IMS afin d'éviter de charger le réseau. L'étape de dés-enregistrement permet ainsi que le prochain message d'enregistrement du terminal portant la nouvelle priorité du terminal parviennent effectivement au cœur de réseau IMS.
Selon un mode de réalisation particulier de l'invention, le procédé de gestion dynamique de la priorité d'un terminal comprend une étape préalable de stockage de la valeur initiale du paramètre de priorité du terminal. Ainsi, la valeur initiale du paramètre de priorité peut être utilisée pour mettre à jour la valeur du paramètre de priorité à la fin de l'évènement prédéterminé.
Selon un mode de réalisation particulier de l'invention, le procédé de gestion dynamique de la priorité d'un terminal comprend une étape préalable de mise à jour de la valeur du paramètre de priorité associée à un événement prédéterminé. L'utilisateur du terminal peut ainsi configurer au moins un évènement prédéterminé à détecter et la valeur du paramètre de priorité associée à cet évènement.
Selon un mode de réalisation particulier de l'invention, l'évènement prédéterminé correspond à la localisation du terminal. La valeur du paramètre de priorité du terminal peut ainsi varier en fonction de la localisation du terminal, par exemple si le terminal est en situation de nomadisme.
Selon un mode de réalisation particulier de l'invention, la valeur du paramètre de priorité est en outre affectée en fonction de la valeur du paramètre de priorité d'au moins un deuxième terminal partageant la même identité publique que le premier terminal et/ou en fonction d'au moins une communication en cours sur le deuxième terminal. Ainsi si le deuxième terminal a une priorité plus grande que le premier terminal mais qu'il a une communication en cours, la valeur de priorité du premier terminal va être augmentée afin que le premier terminal soit alors plus prioritaire et que les communications entrantes lui soient présentées en priorité.
Selon un mode de réalisation particulier de l'invention, l'évènement prédéterminé peut être une date ou un horaire prédéterminé, par exemple si l'utilisateur du terminal ne souhaite pas recevoir les communications entrantes en priorité pendant ses horaires de bureau.
L'évènement prédéterminé peut aussi correspondre à la détection d'un réseau de télécommunications auquel le terminal est connecté, par exemple si l'utilisateur souhaite limiter la réception de communications sur les réseaux de faible bande passante ou de faible qualité de service.
L'évènement prédéterminé peut aussi correspondre à la détection d'un niveau de réception du réseau d'accès, par exemple s'il s'agit d'un réseau WIFI et que le niveau de signal atteint un seuil minimal prédéterminé, le terminal peut positionner une priorité minimale afin de limiter la réception de communications entrantes de mauvaise qualité.
L'événement prédéterminé peut aussi correspondre au niveau de priorité de l'application VoIP sur le terminal. Par exemple, si l'application VoIP est mise en œuvre en arrière-plan sur un terminal multitâches, le terminal peut selon la préférence de l'utilisateur positionner une priorité minimale ou une priorité maximale de réception de communication entrante.

L'événement prédéterminé peut aussi correspondre à une communication en cours sur le terminal, par exemple si l'utilisateur du terminal ne souhaite pas être dérangé par une communication entrante lorsqu'il est déjà occupé par une communication.
La valeur du paramètre de priorité peut aussi être affectée en fonction du type de communication en cours sur le terminal, par exemple si l'utilisateur en communication vidéo ne souhaite pas être dérangé par une communication entrante en mode audio.
L'évènement prédéterminé peut également correspondre à l'utilisation du terminal en modes mains libres, par exemple si l'utilisateur du terminal est en voiture, il peut souhaiter limiter la réception de communications entrantes.
L'évènement prédéterminé peut aussi correspondre à une utilisation particulière du terminal: utilisation en mode vertical ou horizontal, ou utilisation d'une application prédéterminée sur le terminal, par exemple si l'utilisateur lit ses messages électroniques sur son terminal ou utilise une fonction GPS.
L'évènement prédéterminé peut aussi correspondre à la capacité courante du terminal qui est fonction de la charge de son processeur ou de la taille mémoire utilisée pour faire fonctionner les applications en cours d'utilisation sur le terminal.
L'évènement prédéterminé peut aussi correspondre à l'utilisation en mode discret du terminal, la mise en mode discret d'un terminal indique par exemple que l'utilisateur souhaite limiter la réception de communications entrantes.
L'évènement prédéterminé peut aussi correspondre à un faible niveau de charge de la batterie du terminal. Ainsi, par exemple lorsque le terminal présente un niveau de charge de sa batterie inférieure à un seuil prédéterminé, sa priorité est diminuée afin que les communications ne lui soient pas présentées en premier. Lorsque le niveau de charge de la batterie du terminal augmente et atteint un second seuil prédéterminé, la priorité du terminal est augmentée.

L'invention concerne également un dispositif de gestion dynamique de la priorité de réception d'une communication d'un premier terminal par rapport à au moins un deuxième terminal. Les premier et deuxième terminaux sont connectés à un réseau de télécommunications et sont associés à la même identité publique. Le dispositif comprend des moyens de détection d'un événement prédéterminé relatif au premier terminal et des moyens d'envoi d'une valeur d'un paramètre de priorité du premier terminal vers un dispositif de gestion du réseau de télécommunications, la valeur du paramètre de priorité étant affectée en fonction de l'évènement prédéterminé. Ainsi, la valeur du paramètre de priorité d'un terminal varie en fonction d'un événement relatif au premier terminal et le cœur de réseau peut adapter la présentation de communication entrante vers l'identité publique du premier terminal en fonction de la priorité du premier terminal.
Les différents modes ou caractéristiques de réalisation mentionnés ci-après peuvent être ajoutés indépendamment ou en combinaison les uns avec les autres, aux caractéristiques du dispositif défini ci-dessus.

Selon un mode particulier de réalisation de l'invention, le dispositif comprend aussi des moyens d'enregistrement et de dés-enregistrement du premier terminal auprès du dispositif de gestion du réseau de télécommunications. Ainsi, pour les réseaux de type IMS par exemple, le cœur de réseau est informé de la priorité d'un terminal lors de l'enregistrement de ce terminal dans le cœur de réseau.
Selon un mode particulier de réalisation de l'invention, le dispositif comprend des moyens de stockage de la valeur initiale du paramètre de priorité du premier terminal. Le paramètre de priorité du premier terminal peut ainsi être réaffecté de sa valeur initiale à la fin de l'événement prédéterminé qui a été détecté.
Selon un mode particulier de réalisation de l'invention, le dispositif comprend des moyens de mise à jour de la valeur du paramètre de priorité associée à un événement prédéterminé. Il est ainsi possible de configurer les valeurs de priorité qui sont associées aux événements relatifs au premier terminal qui seront détectés.
Selon un mode particulier de réalisation de l'invention, le dispositif comprend des moyens d'affichage de la valeur courante du paramètre de priorité du premier terminal sur l'écran du premier terminal. L'utilisateur est ainsi informé en temps réel de la priorité de son terminal.

L'invention concerne également un terminal comprenant un dispositif de gestion dynamique de la priorité d'un terminal tel que décrit ci-dessus.

L'invention concerne aussi un programme d'ordinateur comportant des instructions pour l'exécution du procédé de gestion dynamique de la priorité d'un terminal tel que décrit ci-dessus, lorsque le programme est exécuté par un processeur.
L'invention concerne également un support d'information lisible par un ordinateur, et comportant des instructions d'un programme d'ordinateur tel que mentionné ci-dessus.

### Liste des figures

D'autres avantages et caractéristiques de l'invention apparaîtront plus clairement à la lecture de la description suivante d'un mode de réalisation particulier de l'invention, donné à titre de simple exemple illustratif et non limitatif, et des dessins annexés, parmi lesquels:
- la figure 1, déjà partiellement commentée, présente un système comportant une installation téléphonique reliée à un réseau de télécommunications, dans lequel l'invention peut être mise en œuvre;
- la figure 2 illustre les étapes du procédé de gestion dynamique de la priorité d'un terminal selon un mode de réalisation de l'invention;
- la figure 3 illustre les étapes du procédé de gestion dynamique de la priorité d'un terminal selon un autre mode particulier de réalisation de l'invention;
- la figure 4 illustre les étapes du procédé de gestion dynamique de la priorité d'un terminal selon un autre mode particulier de réalisation de l'invention;
- la figure 5 illustre les messages échangés lors de la réalisation des étapes du procédé selon un mode particulier de réalisation de l'invention;
- la figure 6 illustre les messages échangés lors de la réalisation des étapes du procédé selon un autre mode particulier de réalisation de l'invention; et
- la figure 7 illustre la structure d'un dispositif de gestion dynamique de la priorité d'un terminal.

### Description d'un mode particulier de réalisation de l'invention

La figure 1 illustre une installation téléphonique 19, par exemple une installation téléphonique privée, comportant un téléphone analogique 16 relié à une passerelle résidentielle 14 connectée au réseau de télécommunications 10. Le réseau de télécommunications 10 peut par exemple être un réseau IMS. L'installation téléphonique 19 comporte également un terminal intégrant un softphone 15a pouvant se connecter au réseau 10 par l'intermédiaire d'une connexion sans fil WIFI ou d'une connexion filaire et de la passerelle résidentielle 14 ou bien en situation de nomadisme 15b par l'intermédiaire d'une connexion sans fil WIFI et d'un point d'accès 12.
Les terminaux 16 et 15a,b sont associés du point de vue du réseau 10 à la même identité publique IMPU.
Le réseau de télécommunications 10 comprend un serveur de contrôle d'appel 17, appelé S-CSCF, assurant par exemple l'enregistrement des terminaux, l'authentification des terminaux, les services de présentation de communication aux terminaux enregistrés en cœur de réseau, le routage des appels sortants, ou encore d'autres fonctions de service.
Lorsqu'une communication entrante à destination de l'installation téléphonique 19 est initiée, le serveur de contrôle d'appel 17 identifie les terminaux de l'installation téléphonique 19 qui possèdent la valeur de paramètre de priorité la plus élevée. Le serveur de contrôle d'appel 17 présente ensuite la communication entrante à ces terminaux.

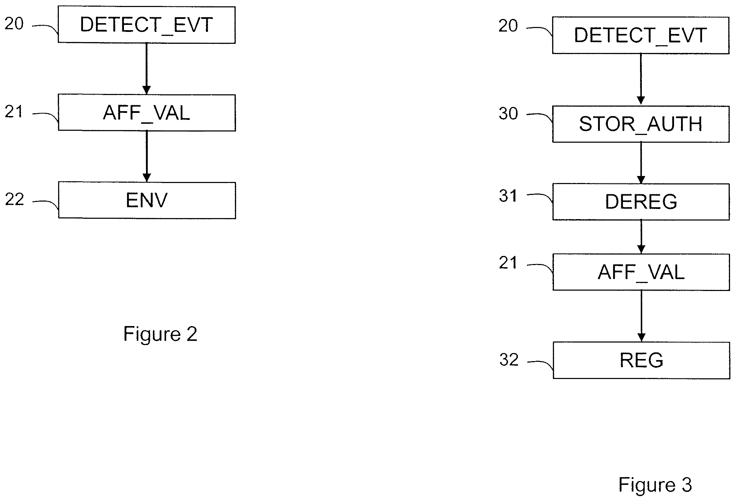

La figure 2 illustre les étapes du procédé de gestion dynamique de la priorité d'un terminal selon un mode de réalisation de l'invention. Une étape 20 de détection d'un événement (DETECT_EVT) est mise en œuvre. L'événement détecté est relatif au terminal mettant en œuvre les étapes du procédé, par exemple le terminal 15a de la figure 1.
La détection d'un événement peut correspondre à la notification par le calendrier du terminal d'une date et/ou d'un horaire particulier, par exemple les horaires de bureau de l'utilisateur du terminal. La détection de l'évènement peut aussi correspondre par exemple à la localisation du terminal. La localisation du terminal peut être fournie au terminal dans un fichier de configuration envoyé par le système d'information de l'opérateur qui localise le terminal grâce à l'analyse de l'adresse IP utilisée par le paquet IP transportant la demande de configuration du terminal au démarrage. En relation avec la figure 1, le terminal 15a peut ainsi être localisé comme étant connecté à la passerelle résidentielle 14 de l'installation téléphonique 19 si l'adresse IP source transportant la demande de configuration du terminal 15a correspond à l'adresse IP de la passerelle 14 allouée par le fournisseur d'accès au réseau IP. Le terminal peut autrement être localisé en mode nomadisme 15b si l'adresse IP est différente.
La localisation du terminal peut aussi être effectuée par le terminal lui-même, à l'aide d'un logiciel GPS (pour Global Positioning System) intégré dans le terminal par exemple.
La détection de l'évènement peut aussi correspondre à la réception ou à l'émission d'une communication par le terminal.
La détection de la réception ou de l'émission d'une communication peut également être complétée par l'analyse du numéro du correspondant. En fonction de la configuration initiale de l'utilisateur du terminal, la détection positive de l'évènement peut être dépendante du numéro du correspondant.
La détection de l'évènement peut aussi correspondre à la détection d'une connexion à un pont de conférence à plusieurs, par exemple par la détection d'une situation de double appel et de demande de connexion vers un pont de conférence à 3 dès lors que le terminal dispose de l'URI (pour Uniform Request Identifier en anglais) du pont de conférence fourni dans la configuration du terminal et gère le message SIP REFER pour demander aux deux correspondants de se connecter également sur le pont de conférence.
La détection de l'évènement peut aussi correspondre à la détection du type de communication en cours sur le terminal ou du codeur utilisé, par exemple en analysant le SDP (pour Session Description Protocol en anglais) négocié de la communication en cours.
La détection de l'évènement peut aussi correspondre à la détection du type de réseau auquel le terminal est connecté, par exemple les couches basses du terminal peuvent remonter en temps réel au softphone intégré dans le terminal le type d'accès utilisé (par exemple 3G, LTE, WIFI, ...).
La détection de l'évènement peut aussi correspondre au niveau de réception du réseau d'accès.
La détection de l'évènement peut aussi correspondre au fait que l'application VoIP soit en arrière-plan ou au premier-plan sur le terminal.
La détection de l'évènement peut également correspondre à l'orientation verticale ou horizontale d'utilisation du terminal.
La détection de l'évènement peut également correspondre à la détection du nombre de terminaux partageant la même identité publique et enregistrés en cœur de réseau IMS. Cette information peut être obtenue par le terminal lorsqu'il s'enregistre périodiquement en cœur de réseau IMS à l'aide de la réponse fournie par le réseau IMS dans le message SIP 200OK. Ce message contient la liste des adresses de contact enregistrées pour une même identité publique. L'information peut aussi être obtenue par l'envoi d'un message de souscription SIP SUBSCRIBE à l'évènement Reg Event défini dans la norme RFC3860, ce message étant envoyé par le terminal au serveur de contrôle d'appel S-CSCF. La souscription à l'évènement Reg Event permet au terminal d'être informé des changements des enregistrements en cœur de réseau IMS relatifs à l'identité publique associée au terminal, par exemple l'ajout ou la suppression d'une adresse de contact.

La détection de l'évènement peut aussi correspondre à la détection des communications en cours sur les terminaux partageant la même identité publique et enregistrés en cœur de réseau IMS. Le terminal disposant des adresses de contact des terminaux enregistrés, obtenus par exemple à l'aide des techniques décrites précédemment, il peut utiliser le message SIP OPTIONS en indiquant dans le champ Request URI l'adresse de contact du terminal à adresser. Le terminal recevant le message SIP OPTIONS peut alors renvoyer un des messages suivants selon le cas:
- message "SIP 200OK" indiquant que le terminal adressé est joignable et n'a pas de communication en cours,
- message "SIP 486 Busy here" indiquant que le terminal adressé est joignable mais qu'il a au moins une communication en cours,
- message "SIP 408 time out" indiquant que le terminal adressé n'est pas joignable, par exemple à cause d'un problème de réseau d'accès,
- Message "SIP 480 Called Party Not Registered" indiquant que le terminal adressé n'est plus enregistré en cœur de réseau IMS.
En cas de détection positive, l'étape 21 (AFF_VAL) d'affectation d'une valeur de priorité affecte au paramètre de priorité q du terminal la valeur de priorité associée à l'événement détecté lors de l'étape 20.
A l'étape 22 (ENV), la valeur de priorité affectée est envoyée au dispositif de gestion du réseau.
Selon un mode particulier de réalisation de l'invention, l'envoi de la valeur de priorité affectée est fait par l'envoi d'un message SIP REGISTER dans lequel le paramètre q de l'adresse de contact correspondant au terminal est positionné à la valeur de priorité affectée précédemment. Le message SIP REGISTER envoyé par le terminal correspond à un message d'enregistrement du terminal dans le cœur de réseau IMS.

La figure 3 illustre les étapes du procédé de gestion dynamique de la priorité d'un terminal selon un autre mode particulier de réalisation de l'invention. L'étape 20 (DETECT_EVT) de détection d'un événement, similaire à celle décrite à la figure 2, est mise en œuvre.
En cas de détection positive, dans une étape 30 (STOR_AUTH) optionnelle, le procédé enregistre les paramètres d'authentification utilisé par le terminal.
A l'étape 31 (DEREG) le procédé envoie un message SIP REGISTER comportant une valeur du champ Expires égale à 0. A la réception de ce message, le cœur de réseau IMS dés-enregistre le terminal du réseau.
L'étape 21 d'affectation de la valeur de paramètre de priorité en fonction de l'évènement détecté est mise en œuvre. Cette étape est similaire à celle de la figure 2. A l'étape 32, le procédé envoie la valeur du paramètre de priorité du terminal au cœur de réseau IMS par l'envoi d'un message SIP REGISTER dans lequel le paramètre q de l'adresse de contact du terminal est positionné à la valeur du paramètre de priorité affectée. Si les paramètres d'authentification ont été enregistrés à l'étape 30, le procédé intègre ces paramètres dans le message SIP REGISTER envoyé à l'étape 32. A la réception du message SIP REGISTER, le cœur de réseau IMS enregistre le terminal en tenant compte de la nouvelle valeur du paramètre de priorité q du terminal.

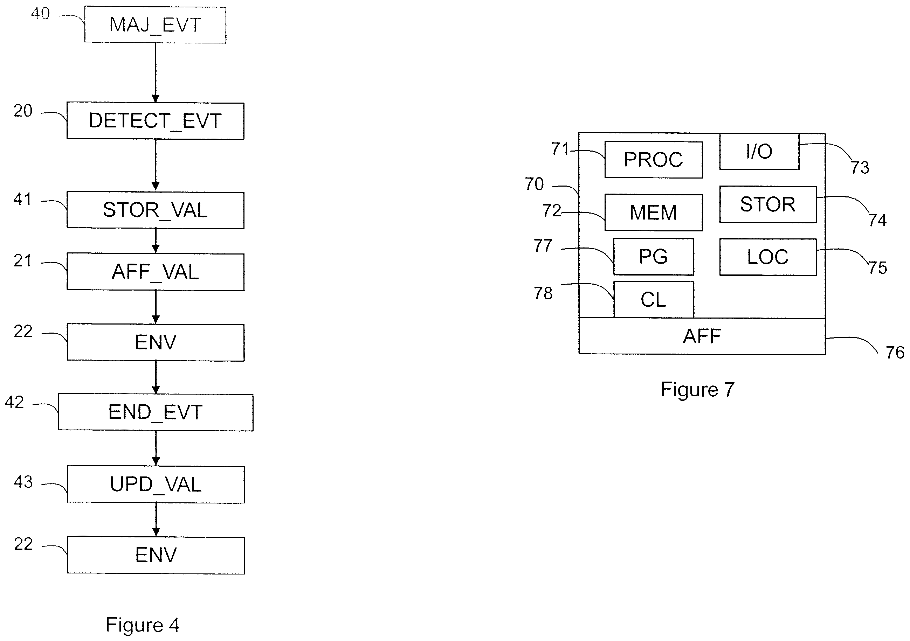

La figure 4 illustre les étapes du procédé de gestion dynamique de la priorité d'un terminal selon un autre mode particulier de réalisation de l'invention.

Une étape préalable 40 (MAJ_EVT) de mise à jour de la valeur de priorité associée à un événement est mise en œuvre. Cette étape permet d'associer à un événement prédéterminé une valeur du paramètre de priorité pour le terminal.
Par exemple, pour l'exemple de la figure 1, si la valeur du paramètre de priorité de la passerelle résidentielle 14 est positionnée à 0.5, pour la détection du terminal 15b en situation de nomadisme, la valeur du paramètre de priorité du terminal 15b peut être positionnée à 0. Ainsi, le terminal 15b a une priorité faible de réception des communications entrantes lorsqu'il est en situation de nomadisme. Lorsque le terminal 15a est détecté à proximité de la passerelle résidentielle 14, la valeur du paramètre de priorité peut être positionnée à 0.5. Ainsi le terminal 15a a une priorité de réception des communications entrantes égale à celle de la passerelle résidentielle 14.
Pour la détection d'une date et/ou d'un horaire particulier, la valeur du paramètre de priorité peut par exemple être positionnée à 0 pour les dates et horaires correspondant aux jours et aux heures de travail de l'utilisateur du terminal.
Pour la détection d'une communication en cours sur le terminal 15a, la valeur du paramètre de priorité peut par exemple être positionnée à 0, afin que l'utilisateur du terminal 15a ne soit pas dérangé par une nouvelle communication.
De la même manière, la valeur de priorité peut être positionnée à 0 si le terminal 15a est en communication professionnelle.
De la même manière, la valeur de priorité peut être positionnée à 0 si le terminal 15a est en communication avec plusieurs interlocuteurs par l'intermédiaire d'un pont de conférence.
Pour la détection du type de communication sur le terminal 15a, la valeur du paramètre de priorité peut par exemple être positionnée à 0 si la communication en cours est en mode vidéo. La valeur du paramètre de priorité peut par exemple rester à sa valeur initiale si la communication en cours est en mode audio.
De la même manière, la priorité peut ne pas être diminuée si la communication en cours sur le terminal 15a utilise un réseau de faible bande passante ou offre un niveau de qualité faible.
La valeur de la priorité du terminal 15a peut par exemple être positionnée à 1 quand d'autres terminaux s'enregistrent en cœur de réseau avec la même identité publique. L'utilisateur du terminal 15a peut ainsi recevoir en priorité les communications entrantes. La priorité peut aussi être positionnée à 0 si l'utilisateur ne souhaite pas être prioritaire pour la réception de communications entrantes.
Pour la détection des communications en cours sur les autres terminaux associés à la même identité publique, la valeur de la priorité du terminal peut être positionnée à 1. Ainsi, le terminal a une priorité grande de réception des communications entrantes.
Si par exemple, l'utilisateur du terminal 15a utilise un service Clic to Call de rappel, la valeur de priorité du terminal 15a peut être positionnée à 1 afin que le terminal 15a se voie présenter les prochaines communications en priorité.
La mise à jour 40 de la valeur de priorité associée à un événement prédéterminé peut être effectuée à l'aide d'une application hébergée sur un serveur du fournisseur de service de l'utilisateur du terminal 15a et accessible via une interface web depuis un terminal relié au réseau de télécommunications ou par l'intermédiaire d'une interface homme-machine du terminal 15a. Les étapes 20, 21 et 22 de la figure 4 sont similaires à celles de la figure 2.
En cas de détection positive d'un événement prédéterminé à l'étape 20, le procédé enregistre la valeur courante du paramètre de priorité du terminal lors de l'étape 41 (STOR_VAL), avant de modifier cette valeur courante par la valeur de priorité associée à l'événement détecté à l'étape 20. Après l'envoi de la nouvelle valeur de priorité au cœur de réseau IMS à l'étape 22, le procédé détecte la fin de l'évènement prédéterminé à l'étape 42 (END_EVT).
Lors de l'étape 43 (UPD_VAL), le procédé met à jour la valeur de paramètre de priorité du terminal à l'aide de la valeur enregistrée à l'étape 41. La valeur de priorité mise à jour est envoyée en cœur de réseau IMS à l'étape 22 pour qu'elle soit prise en compte par le réseau lors de futures communications entrantes.

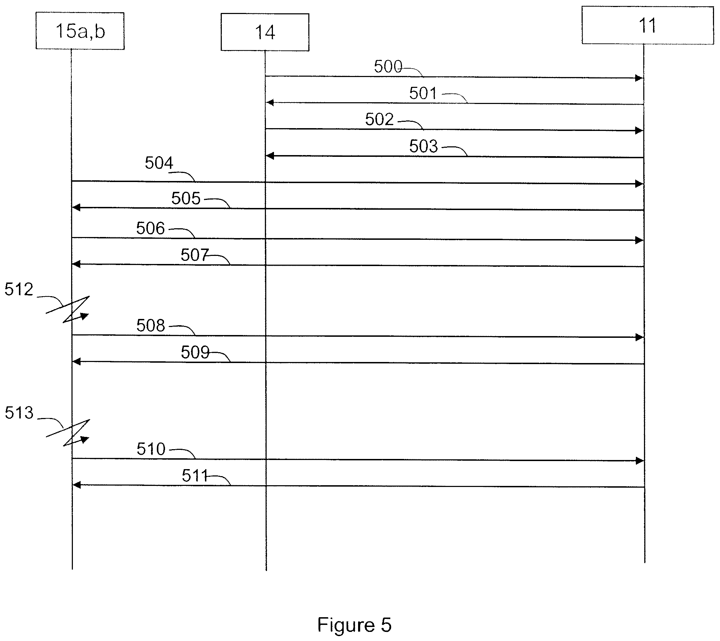

En relation avec la figure 1, la figure 5 illustre les messages SIP échangés entre les terminaux 15a et 14 et le cœur de réseau IMS 11 lors de la réalisation des étapes du procédé de gestion de la priorité selon un mode particulier de réalisation de l'invention.
Les messages 500 à 503 correspondent aux messages échangés pour l'enregistrement initial de la passerelle résidentielle auprès du cœur de réseau IMS. Le message 500 est un message SIP REGISTER d'enregistrement envoyé par la passerelle résidentielle 14 au cœur de réseau IMS et comportant au moins l'identité publique associée à la passerelle résidentielle, l'adresse de contact de la passerelle et la valeur du paramètre de priorité q affectée à la passerelle. Dans ce message, la valeur de q est positionnée à 0.5. La passerelle résidentielle a une valeur moyenne de priorité de réception des communications entrantes.
La passerelle résidentielle reçoit alors en retour 501 un message SIP 401 Nonce du cœur de réseau IMS lui indiquant des données d'authentification à utiliser pour l'enregistrement.
La passerelle résidentielle renvoie alors 502 un message SIP REGISTER au cœur de réseau IMS, le message SIP REGISTER 502 comportant les mêmes informations que le message SIP REGISTER précédent 500 et complémenté par les données d'authentification calculées par rapport à celles reçues en 501.
La passerelle résidentielle reçoit en retour 503 un message SIP 200 OK du cœur de réseau indiquant que la passerelle résidentielle a effectivement été enregistrée en cœur de réseau pour une durée égale à 3600 secondes, cette durée étant indiquée dans le champ Expires du message SIP 200OK.
Avant la fin de la durée d'enregistrement, la passerelle résidentielle devra renvoyer un message SIP REGISTER contenant les mêmes paramètres que le message 502 afin de prolonger sa durée d'enregistrement auprès du cœur de réseau. La passerelle doit ainsi se réenregistrer régulièrement auprès du cœur de réseau (enregistrement subséquent).
Les messages 504 à 507 correspondent aux messages échangés pour l'enregistrement initial du terminal 15a auprès du cœur de réseau IMS.

Le message 504 est un message SIP REGISTER d'enregistrement envoyé par le terminal 15a au cœur de réseau IMS et comportant au moins l'identité publique associée au terminal, ici la même identité publique que la passerelle résidentielle 14, l'adresse de contact du terminal et la valeur du paramètre de priorité q affectée au terminal. Dans ce message, la valeur de q est positionnée à 0.5. Le terminal a une valeur de priorité égale à celle de la passerelle résidentielle. Une communication entrante sera alors présentée en parallèle au terminal 15a et la passerelle résidentielle 14 qui la transférera automatiquement au terminal analogique 16 de la figure 1.
Le terminal 15a reçoit en retour en 505 un message SIP 401 Nonce du cœur de réseau IMS lui indiquant des données d'authentification à utiliser pour l'enregistrement.
Le terminal renvoie alors en 506 un message SIP REGISTER au cœur de réseau IMS, le message SIP REGISTER 506 comportant les mêmes informations que le message SIP REGISTER précédent 504 et complémenté par les données d'authentification calculées par rapport à celles reçue en 505.
Le terminal reçoit en retour en 507 un message SIP 200 OK du cœur de réseau. Le terminal a effectivement été enregistré en cœur de réseau pour une durée égale à 300 secondes, cette durée étant fixée par le mécanisme de Binding NAT (pour Network Address Translator en anglais) de la passerelle 14. Ce mécanisme correspond à la création dynamique de tables de correspondance comportant l'adresse IP et le numéro de port utilisés par le terminal 15a et l'adresse IP et le numéro de port utilisé par la passerelle résidentielle 14 pour émettre et recevoir le trafic du terminal 15a vers ou depuis le réseau IMS 11, la durée de vie de cette table de correspondance étant généralement de 300 secondes.
Avant la fin de la durée d'enregistrement, le terminal devra renvoyer un message SIP REGISTER contenant les mêmes paramètres que le message 506 afin de prolonger la durée de son enregistrement auprès du cœur de réseau. Le terminal doit ainsi se réenregistrer régulièrement auprès du cœur de réseau.
A la détection d'un événement prédéterminé 512, par exemple la détection du terminal 15a en situation de niveau de batterie faible, le terminal 15a envoie en 508 un message SIP REGISTER comportant les mêmes données que le message SIP REGISTER 506 mais avec une valeur de paramètre de priorité égale à 0. Ainsi, le terminal 15a a une priorité de réception de communication entrante inférieure à la priorité de la passerelle résidentielle 14. Une communication entrante sera alors présentée en premier à la passerelle résidentielle 14 qui la transférera automatiquement au terminal analogique 16. Puis si le terminal 16 n'accepte pas la communication, la communication sera alors présentée au terminal 15a.
La détection de l'évènement prédéterminé peut aussi correspondre par exemple à la détection d'une communication en cours sur le terminal 16 relié à la passerelle résidentielle. La valeur de paramètre de priorité du terminal 15a qui est envoyée dans le message 508 sera alors égale à 1. Ainsi, le terminal 15a a une priorité de réception de communication entrante supérieure à la priorité de la passerelle résidentielle 14. Une communication entrante sera alors présentée en premier au terminal 15a. Puis si le terminal 15a n'accepte pas la communication, la communication sera alors présentée à la passerelle résidentielle qui notifiera le terminal 16 d'une communication supplémentaire.
Si la détection de l'évènement et l'envoi de la nouvelle valeur de priorité du terminal par le message 508 interviennent au même instant que l'envoi d'un message SIP REGISTER de réenregistrement régulier, un seul message SIP REGISTER contenant la nouvelle valeur de priorité du terminal est envoyée.
Après l'envoi du message 508, le terminal reçoit en 509 un message SIP 2000K indiquant la prise en compte du message SIP REGISTER 508 par le cœur de réseau IMS. Le message SIP 200 OK indique une durée d'enregistrement dans son champ Expires de 300 secondes. Le terminal doit régulièrement renvoyer un message SIP REGISTER identique au message 508 et contenant la nouvelle valeur de priorité.
A la détection de la fin de l'événement prédéterminé en 513, le terminal repositionne la valeur de son paramètre de priorité à sa valeur initiale de 0.5 et envoie en 510 un message SIP REGISTER identique au message 506. Le terminal reçoit en 511 en retour un message SIP 200OK contenant une valeur de 300 secondes dans son champ Expires.

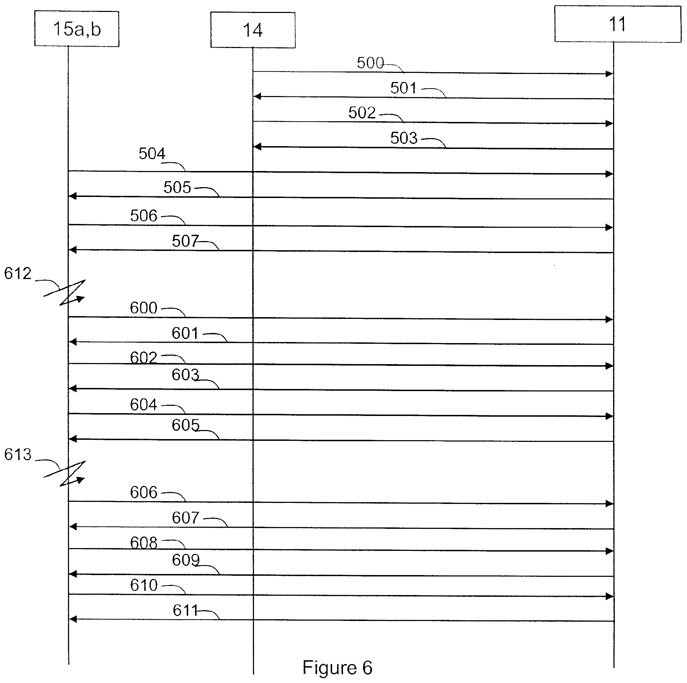

En relation avec la figure 1, la figure 6 illustre les messages SIP échangés entre les terminaux 15a et 14 et le cœur de réseau IMS 11 lors de la réalisation des étapes du procédé de gestion de la priorité selon un autre mode particulier de réalisation de l'invention.
Dans ce mode de réalisation, les messages 500 à 507 sont identiques aux messages 500 à 507 de la figure 5 et correspondent aux messages échangés entre les terminaux 15a et 14 et le cœur de réseaux IMS 11 pour l'enregistrement initial de ces terminaux.
A la détection d'un événement prédéterminé 612 relatif au terminal 15a, le terminal 15a envoie en 600 un message SIP REGISTER au cœur de réseau IMS. Le message 600 contient les mêmes informations que le message SIP REGISTER 506 mais avec une valeur du champ Expires égale à 0. Ce message informe ainsi le cœur de réseau du dés-enregistrement du terminal 15a du cœur de réseau. Le terminal 15a reçoit alors en retour en 601 un message SIP 200OK du cœur de réseau.
Selon un mode de réalisation particulier de l'invention, le terminal peut ensuite envoyer en 602 un message SIP REGISTER identique au message SIP REGISTER 504 mais avec une nouvelle valeur de paramètre de priorité, par exemple 0. Ce message constitue une nouvelle demande d'enregistrement par le terminal mais sans connaissance des données d'authentification. En retour, le terminal 15a reçoit en 603 un message SIP 401 Nonce du cœur de réseau 11 contenant les données d'authentification.
Le terminal 15a envoie alors en 604 un message SIP REGISTER contenant les données d'authentification calculées par rapport à celles reçue en 603 et la nouvelle valeur du paramètre de priorité. Le terminal 15a reçoit en retour en 605 un message SIP 200OK.
A la détection de la fin de l'événement prédéterminé en 613, le terminal envoie en 606 un message de dés-enregistrement SIP REGISTER contenant les mêmes données que le message SIP REGISTER 604 mais avec une valeur du champ Expires égale à O.

Le terminal reçoit en retour en 607 un message SIP 200OK. Le terminal peut ensuite envoyer en 608 un message SIP REGISTER identique au message SIP REGISTER 504, ce message contenant la valeur du paramètre de priorité initiale 0.5. Ce message constitue une nouvelle demande d'enregistrement par le terminal mais sans connaissance des données d'authentification. En retour, le terminal 15a reçoit en 609 un message SIP 401 Nonce du cœur de réseau 11 contenant les données d'authentification.
Le terminal 15a envoie alors en 610 un message SIP REGISTER contenant les données d'authentification calculées par rapport à celles reçue en 609 et la valeur initiale du paramètre de priorité. Le terminal 15a reçoit en retour en 611 un message SIP 200OK.
Les messages 602, 603, 608 et 609 ne sont nécessaires que si le terminal 15a n'a pas sauvegardé les données d'authentification avant la demande de dés-enregistrement en 600 et en 606.
Ce mode particulier de réalisation de l'invention peut être utile dans les architectures de réseaux IMS mettant en œuvre une technique de Registration Caching. La technique de Registration Caching permet de limiter le nombre de messages à transmettre au serveur S-CSCF. Cependant, les messages de réenregistrement SIP REGISTER ne sont alors plus transmis de manière systématique au S-CSCF. Ainsi, un message SIP REGISTER contenant une nouvelle valeur de paramètre de priorité peut ne pas être transmis au S-CSCF. L'envoi d'un message de dés-enregistrement SIP REGISTER avec une valeur de champ Expires égale à 0 permet que le message d'enregistrement SIP REGISTER contenant la nouvelle valeur de priorité du terminal soit transmis au S-CSCF.

La figure 7 illustre la structure d'un dispositif 70 de gestion dynamique de la priorité d'un terminal. Le dispositif 70 selon l'invention comprend une mémoire 72 comprenant une mémoire tampon (MEM), une unité de traitement 71, équipée par exemple d'un microprocesseur (PROC), et pilotée par le programme d'ordinateur (PG) 77, mettant en œuvre le procédé de gestion de la priorité tel que décrit dans l'invention.
A l'initialisation, les instructions de code du programme d'ordinateur 77 sont par exemple chargées dans une mémoire RAM avant d'être exécutées par le processeur de l'unité de traitement 71. Le microprocesseur de l'unité de traitement 71 met en œuvre les étapes du procédé de gestion de la priorité selon l'invention décrit précédemment et notamment les étapes de détection d'un événement prédéterminé, d'envoi d'une valeur de paramètre de priorité du terminal, de dés-enregistrement du terminal auprès du réseau, de stockage de la valeur courante du paramètre de priorité et de mise à jour de la valeur de priorité associée à un événement prédéterminé, selon les instructions du programme d'ordinateur 77.
Pour cela, le dispositif comprend, outre la mémoire tampon 72, des moyens de communication avec le réseau de télécommunications (I/O) 53 et des moyens de stockage (STOR) 54 de la valeur de paramètre de priorité.
Selon un mode de réalisation particulier de l'invention, le dispositif 70 peut également comporter des moyens de localisation (LOC) 75, tels que par exemple un logiciel GPS, permettant de localiser le terminal.

Selon un mode de réalisation particulier de l'invention, le dispositif 70 peut également comporter des moyens d'affichage (AFF) 76 de la valeur du paramètre de priorité. Cet affichage permet à l'utilisateur de connaître en temps réel la valeur du paramètre de priorité de son terminal, de la même manière que la date ou l'heure.
Selon un mode de réalisation particulier de l'invention, le dispositif 70 peut être intégré dans un terminal. Le dispositif 70 peut également comporter des moyens de configuration du paramètre de priorité q du terminal. Ces moyens peuvent par exemple correspondre à une interface homme-machine disponible sur le terminal affichée sur l'écran du terminal, l'utilisateur pouvant configurer le paramètre q grâce à un clavier numérique ou alphanumérique du terminal.

## Revendications

1. Procédé de gestion dynamique de la priorité de réception d'une communication entrante sur un premier terminal (15a) par rapport à au moins un deuxième terminal (16), les premier et deuxième terminaux étant connectés à un réseau de télécommunications (10) et étant associés à une même identité publique, le procédé est **caractérisé en ce qu'**il comprend:
- Une étape de détection (20) par le premier terminal, d'un événement relatif audit premier terminal,
- Dans le cas d'une détection positive, une étape d'envoi (22) d'une valeur d'un paramètre de priorité du premier terminal (15a) vers un dispositif (17) de gestion du réseau de télécommunications, la valeur du paramètre de priorité étant affectée (21) en fonction de l'événement.

2. Procédé de gestion dynamique de la priorité selon la revendication 1 **caractérisé en ce que** l'étape d'envoi est effectuée par une étape d'enregistrement du premier terminal auprès du dispositif de gestion du réseau de télécommunications.

3. Procédé de gestion dynamique de la priorité selon la revendication 2 **caractérisé en ce qu'**il comprend une étape préalable de dés-enregistrement du premier terminal auprès du dispositif de gestion du réseau de télécommunications.

4. Procédé de gestion dynamique de la priorité selon la revendication 1 **caractérisé en ce qu'**il comprend une étape préalable de stockage de la valeur initiale du paramètre de priorité du premier terminal, la valeur du paramètre de priorité du premier terminal étant réaffectée à la fin de l'événement à la valeur initiale stockée.

5. Procédé de gestion dynamique de la priorité selon la revendication 1 **caractérisé en ce qu'**il comprend une étape préalable de mise à jour de la valeur du paramètre de priorité associée à un événement.

6. Procédé de gestion dynamique de la priorité selon l'une quelconque des revendications 1 à 5 **caractérisé en ce que** l'événement correspond à la localisation du premier terminal.

7. Procédé de gestion dynamique de la priorité selon l'une quelconque des revendications 2 à 5 **caractérisé en ce que** la valeur du paramètre de priorité est en outre affectée en fonction de la valeur du paramètre de priorité du deuxième terminal et/ou en fonction d'au moins une communication en cours sur le deuxième terminal.

8. Procédé de gestion dynamique de la priorité selon l'une quelconque des revendications 1 à 5 **caractérisé en ce que** l'événement appartient à un groupe comprenant:
- Une date et/ou un horaire prédéterminé,
- Un réseau de télécommunications auquel le premier terminal est connecté,
- Un niveau de réception du réseau d'accès auquel le premier terminal est connecté,
- Une communication en cours sur le premier terminal,
- Un type de communication en cours sur le premier terminal,
- L'utilisation du mode mains libres du premier terminal,
- L'utilisation du premier terminal en mode vertical ou horizontal,
- La charge du processeur du premier terminal,
- La taille mémoire utilisée par le premier terminal,
- La mise en mode discret du premier terminal,
- L'utilisation d'une application prédéterminée sur le premier terminal,
- La priorité de l'application VoIP installée sur le terminal,
- Le niveau de charge de la batterie du premier terminal.

9. Dispositif (70) de gestion dynamique de la priorité de réception d'une communication entrante sur un premier terminal (15a) par rapport à au moins un deuxième terminal (16), les premier et deuxième terminaux étant connectés à un réseau de télécommunications (10) et étant associés à une même identité publique, le dispositif est **caractérisé en ce qu'**il comprend:
- Des moyens de détection d'un événement relatif audit premier terminal,
- Des moyens d'envoi d'une valeur d'un paramètre de priorité du premier terminal vers un dispositif de gestion du réseau de télécommunications, la valeur du paramètre de priorité étant affectée en fonction de l'événement.

10. Dispositif de gestion dynamique selon la revendication 9 **caractérisé en ce qu'**il comprend des moyens d'enregistrement et de dés-enregistrement du premier terminal auprès du dispositif de gestion du réseau de télécommunications.

11. Dispositif de gestion dynamique selon la revendication 9 **caractérisé en ce qu'**il comprend des moyens de stockage de la valeur initiale du paramètre de priorité du premier terminal.

12. Dispositif de gestion dynamique selon la revendication 9 **caractérisé en ce qu'**il comprend des moyens de mise à jour de la valeur du paramètre de priorité associée à un événement.

13. Dispositif de gestion dynamique selon la revendication 9 **caractérisé en ce qu'**il comprend des moyens d'affichage de la valeur courante du paramètre de priorité du premier terminal sur l'écran du premier terminal.

14. Terminal comprenant un dispositif selon l'une quelconque des revendications 9 à 13.

15. Programme d'ordinateur comportant des instructions pour l'exécution du procédé de gestion dynamique de la priorité d'un terminal selon l'une quelconque des revendications 1 à 8 lorsque le programme est exécuté par un processeur.

## Patentansprüche

1. Verfahren zur dynamischen Verwaltung der Empfangspriorität einer eingehenden Kommunikation an einem ersten Endgerät (15a) in Bezug auf wenigstens ein zweites Endgerät (16), wobei das erste und das zweite Endgerät mit einem Telekommunikationsnetz (10) verbunden sind und ein und derselben öffentlichen Identität zugeordnet sind, wobei das Verfahren **dadurch gekennzeichnet ist, dass** es umfasst:
- einen Schritt der Detektion (20), durch das erste Endgerät, eines Ereignisses, das sich auf das erste Endgerät bezieht,
- im Falle einer positiven Detektion, einen Schritt des Sendens (22) eines Wertes eines Prioritätsparameters des ersten Endgerätes (15a) an eine Vorrichtung (17) zur Verwaltung des Telekommunikationsnetzes, wobei der Wert des Prioritätsparameters in Abhängigkeit von dem Ereignis zugewiesen (21) wird.

2. Verfahren zur dynamischen Verwaltung der Priorität nach Anspruch 1, **dadurch gekennzeichnet, dass** der Schritt des Sendens durch einen Schritt der Anmeldung des ersten Endgerätes bei der Vorrichtung zur Verwaltung des Telekommunikationsnetzes ausgeführt wird.

3. Verfahren zur dynamischen Verwaltung der Priorität nach Anspruch 2, **dadurch gekennzeichnet, dass** es einen vorausgehenden Schritt der Abmeldung des ersten Endgerätes bei der Vorrichtung zur Verwaltung des Telekommunikationsnetzes umfasst.

4. Verfahren zur dynamischen Verwaltung der Priorität nach Anspruch 1, **dadurch gekennzeichnet, dass** es einen vorausgehenden Schritt der Speicherung des Anfangswertes des Prioritätsparameters des ersten Endgerätes umfasst, wobei der Wert des Prioritätsparameters des ersten Endgerätes am Ende des Ereignisses dem gespeicherten Anfangswert neu zugewiesen wird.

5. Verfahren zur dynamischen Verwaltung der Priorität nach Anspruch 1, **dadurch gekennzeichnet, dass** es einen vorausgehenden Schritt der Aktualisierung des einem Ereignis zugeordneten Wertes des Prioritätsparameters umfasst.

6. Verfahren zur dynamischen Verwaltung der Priorität nach einem der Ansprüche 1 bis 5, **dadurch gekennzeichnet, dass** das Ereignis der Lokalisierung des ersten Endgerätes entspricht.

7. Verfahren zur dynamischen Verwaltung der Priorität nach einem der Ansprüche 2 bis 5, **dadurch gekennzeichnet, dass** der Wert des Prioritätsparameters außerdem in Abhängigkeit vom Wert des Prioritätsparameters des zweiten Endgerätes und/oder in Abhängigkeit von wenigstens einer am zweiten Endgerät laufenden Kommunikation zugewiesen wird.

8. Verfahren zur dynamischen Verwaltung der Priorität nach einem der Ansprüche 1 bis 5, **dadurch gekennzeichnet, dass** das Ereignis einer Gruppe angehört, welche umfasst:
- ein vorbestimmtes Datum und/oder eine vorbestimmte Uhrzeit,
- ein Telekommunikationsnetz, mit welchem das erste Endgerät verbunden ist,
- ein Empfangsniveau des Zugangsnetzes, mit welchem das erste Endgerät verbunden ist,
- eine laufende Kommunikation am ersten Endgerät,
- einen Typ der laufenden Kommunikation am ersten Endgerät,
- die Verwendung des Freisprechbetriebs des ersten Endgerätes,
- die Verwendung des ersten Endgerätes im vertikalen oder horizontalen Betrieb,
- die Belastung des Prozessors des ersten Endgerätes,
- die Größe des Speichers, die vom ersten Endgerät verwendet wird,
- das Wechseln des ersten Endgerätes in den diskreten Modus,
- die Verwendung einer vorbestimmten Anwendung auf dem ersten Endgerät,
- die Priorität der auf dem Endgerät installierten VoIP-Anwendung,
- den Ladezustand der Batterie des ersten Endgerätes.

9. Vorrichtung (70) zur dynamischen Verwaltung der Empfangspriorität einer eingehenden Kommunikation an einem ersten Endgerät (15a) in Bezug auf wenigstens ein zweites Endgerät (16), wobei das erste und das zweite Endgerät mit einem Telekommunikationsnetz (10) verbunden sind und ein und derselben öffentlichen Identität zugeordnet sind, wobei die Vorrichtung **dadurch gekennzeichnet ist, dass** sie umfasst:
- Mittel zur Detektion eines Ereignisses, das sich auf das erste Endgerät bezieht,
- Mittel zum Senden eines Wertes eines Prioritätsparameters des ersten Endgerätes an eine Vorrichtung zur Verwaltung des Telekommunikationsnetzes, wobei der Wert des Prioritätsparameters in Abhängigkeit von dem Ereignis zugewiesen wird.

10. Vorrichtung zur dynamischen Verwaltung nach Anspruch 9, **dadurch gekennzeichnet, dass** sie Mittel zur Anmeldung und zur Abmeldung des ersten Endgerätes bei der Vorrichtung zur Verwaltung des Telekommunikationsnetzes umfasst.

11. Vorrichtung zur dynamischen Verwaltung nach Anspruch 9, **dadurch gekennzeichnet, dass** sie Mittel zur Speicherung des Anfangswertes des Prioritätsparameters des ersten Endgerätes umfasst.

12. Vorrichtung zur dynamischen Verwaltung nach Anspruch 9, **dadurch gekennzeichnet, dass** sie Mittel zur Aktualisierung des einem Ereignis zugeordneten Wertes des Prioritätsparameters umfasst.

13. Vorrichtung zur dynamischen Verwaltung nach Anspruch 9, **dadurch gekennzeichnet, dass** sie Mittel zur Anzeige des aktuellen Wertes des Prioritätsparameters des ersten Endgerätes auf dem Bildschirm des ersten Endgerätes umfasst.

14. Endgerät, welches eine Vorrichtung nach einem der Ansprüche 9 bis 13 umfasst.

15. Computerprogramm, welches Anweisungen zur Ausführung des Verfahrens zur dynamischen Verwaltung der Priorität eines Endgerätes nach einem der Ansprüche 1 bis 8, wenn das Programm von einem Prozessor ausgeführt wird, umfasst.

## Claims

1. Method for dynamic management of the priority of reception of an incoming communication on a first terminal (15a) with respect to at least one second terminal (16), the first and second terminals being connected to a telecommunications network (10) and being associated with one and the same public identity, the method is **characterized in that** it comprises:
- a step (20) of detection by the first terminal, of an event relating to said first terminal,
- in the case of a positive detection, a step (22) of sending a value of a priority parameter of the first terminal (15a) to a device (17) for managing the telecommunications network, the value of the priority parameter being assigned (21) as a function of the event.

2. Method for dynamic management of the priority according to Claim 1, **characterized in that** the sending step is performed by a step of registering the first terminal with the device for managing the telecommunications network.

3. Method for dynamic management of the priority according to Claim 2, **characterized in that** it comprises a prior step of deregistering the first terminal with the device for managing the telecommunications network.

4. Method for dynamic management of the priority according to Claim 1, **characterized in that** it comprises a prior step of storing the initial value of the priority parameter of the first terminal, the value of the priority parameter of the first terminal being reassigned at the end of the event to the stored initial value.

5. Method for dynamic management of the priority according to Claim 1, **characterized in that** it comprises a prior step of updating the priority parameter's value associated with an event.

6. Method for dynamic management of the priority according to any one of Claims 1 to 5, **characterized in that** the event corresponds to the location of the first terminal.

7. Method for dynamic management of the priority according to any one of Claims 2 to 5, **characterized in that** the value of the priority parameter is furthermore assigned as a function of the value of the priority parameter of the second terminal and/or as a function of at least one communication in progress on the second terminal.

8. Method for dynamic management of the priority according to any one of Claims 1 to 5, **characterized in that** the event belongs to a group comprising:
- a predetermined date and/or time,
- a telecommunications network to which the first terminal is connected,
- a reception level of the access network to which the first terminal is connected,
- a communication in progress on the first terminal,
- a type of communication in progress on the first terminal,
- the use of the hands-free mode of the first terminal,
- the use of the first terminal in vertical or horizontal mode,
- the loading of the processor of the first terminal,
- the memory size used by the first terminal,
- the placing of the first terminal in discrete mode,
- the use of a predetermined application on the first terminal,
- the priority of the voip application installed on the terminal,
- the level of charge of the battery of the first terminal.

9. Device (70) for dynamic management of the priority of reception of an incoming communication on a first terminal (15a) with respect to at least one second terminal (16), the first and second terminals being connected to a telecommunications network (10) and being associated with one and the same public identity, the device is **characterized in that** it comprises:
- means for detecting an event relating to the first terminal,
- means for sending a value of a priority parameter of the first terminal to a device for managing the telecommunications network, the value of the priority parameter being assigned as a function of the event.

10. Dynamic management device according to Claim 9, **characterized in that** it comprises means for registering and deregistering the first terminal with the device for managing the telecommunications network.

11. Dynamic management device according to Claim 9, **characterized in that** it comprises means for storing the initial value of the priority parameter of the first terminal.

12. Dynamic management device according to Claim 9, **characterized in that** it comprises means for updating the priority parameter's value associated with an event.

13. Dynamic management device according to Claim 9, **characterized in that** it comprises means for displaying the current value of the priority parameter of the first terminal on the screen of the first terminal.

14. Terminal comprising a device according to any one of Claims 9 to 13.

15. Computer program comprising instructions for the execution of the method for dynamic management of the priority of a terminal according to any one of Claims 1 to 8 when the program is executed by a processor.
